(19) Europäisches Patentamt
European Patent Office
Office européen des brevets

(11) **EP 2 669 637 A2**

(12) **EUROPEAN PATENT APPLICATION**

(43) Date of publication:
**04.12.2013 Bulletin 2013/49**

(51) Int Cl.:
**G01D 5/353** [(2006.01)]   **G01K 11/32** [(2006.01)]
**G08B 17/06** [(2006.01)]

(21) Application number: **13168786.5**

(22) Date of filing: **22.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.05.2012 US 201213485700**

(71) Applicant: **Kidde Technologies, Inc.**
**Wilson, NC 27896 (US)**

(72) Inventors:
• **Bell, Kenneth Frazer**
  **Raleigh, NC 27610 (US)**
• **Smith, Paul D.**
  **Camberly, Surrey GU15 4AY (GB)**

(74) Representative: **Bridge, Kerry Ann**
**Dehns**
**St Bride's House**
**10 Salisbury Square**
**London EC4Y 8JD (GB)**

(54) **Optical fiber sensing system**

(57)     A method is presented for detecting an alarm condition with an optical fiber sensing system, 10. An interrogator, 12, with a light source, 18, a spectrometer, 20, and a data processor, 22, is used to conduct a fast scan of a plurality of fiber optic sensing elements, 16a, 16b, 16N. First environmental parameter values are calculated for each fiber optic sensing element, 16a, 16b, 16N, from spectrographic data collected by the interrogator, 12, during the first scan, and compared with a first threshold value. If the first environmental parameter value exceeds the first threshold value for any fiber optic sensing element, 16a, 16b, 16N, the fast scan is interrupted to perform a high resolution slow scan of that fiber optic sensing element. The optical fiber sensing system reports an alert if this high resolution slow scan indicates the alarm condition.

Fig. 2

EP 2 669 637 A2

**Description**

BACKGROUND

The present invention relates generally to an optical fiber sensing system, and more particularly to a zoned fire and overheat detection system using optical fiber sensing elements.

Fiber optic sensors are currently used to measure a wide range of parameters in distributed systems ranging from construction sites to aircraft wings. Some such sensors include pressure, strain, and temperature sensors, but fiber optics may generally be used to measure many quantities that can be tied to a physical state of a fiber optic sensing element. Some fiber optic temperature sensors, for instance, operate by detecting thermal expansion of a fiber optic strand, or of a surrounding sheath around or gap between strand segments, with an interferometer. Others sensors detect changes in parameters such as temperature and pressure from Raman backscatter. A data processor correlates interferometer readings to changes in the physical state of the fiber optic sensing element.

Most fiber optic temperature sensors comprise a fiber optic sensing element and an interrogator with a light source, a spectrometer, and a data processor. The sensing element consists of a fiber optic strand that extends from the interrogator into a sensing region. During operation, the interrogator emits light down the fiber optic sensing element. Changes in temperature alter the physical state of the sensing element, and thus its optical characteristics. The spectrometer and data processor assess these differences to identify changes in temperature.

Modern temperature sensors utilize a wide range of spectroscopy and interferometry techniques. These techniques generally fall into two categories: point and quasi distributed sensing based on Fiber Bragg Gratings (FBGs), and fully distributed sensors based on Raman, Brillouin, or Rayleigh scattering. The particular construction of fiber optic sensing elements varies depending on the type of spectroscopy used by the sensor system, but all fiber optic sensors operate by sensing changes in the physical state of the fiber optic sensing element. FBG sensors, for instance, determine a change in temperature ($\Delta T$) by sensing a relative shift in Bragg wavelength ($\Delta\lambda_B/\lambda_B$):

$$\frac{\Delta\lambda_B}{\lambda_B} = (1 - p_e)\varepsilon + (\alpha_\Lambda + \alpha_n)\Delta T \qquad \text{[Equation 1]}$$

where $p_e$ is the strain optic coefficient, $\varepsilon$ is the applied strain, $\alpha_\Lambda$ is the thermal expansion coefficient of the optical fiber, and $\alpha_n$ is its thermo-optic coefficient.

Fiber optic sensing elements are inexpensive, durable, and easily installed relative to conventional electrical temperature sensors. The most expensive element of most fiber optic temperature sensors, therefore, is the interrogator. To reduce costs, some sensor systems attach a plurality of sensing elements to each interrogator via a switch which periodically cycles through each sensing element, allowing a single interrogator to service many separate sensing elements, which may be situated in a number of different detection areas.

Switching fiber optic sensor systems are not without drawbacks. Rapid switching necessitates high interrogator scan rates that limit the spatial and/or temperature resolution achievable by the system. Conversely, systems that switch only slowly between sensing elements visit each sensing element infrequently, and may allow dangerous heat conditions to go unnoticed for tens of seconds which may be critical to fire and heat control.

SUMMARY

The present invention is directed toward a system and method for detecting an alarm condition with an optical fiber sensing system. An interrogator with a light source, a spectrometer, and a data processor is used to conduct a fast scan of a plurality of fiber optic sensing elements. First environmental parameter values are calculated for each fiber optic sensing element from spectrographic data collected by the interrogator during the first scan, and compared with a first threshold value. If the first environmental parameter value exceeds the first threshold value for any fiber optic sensing element, the fast scan is interrupted to perform a high resolution slow scan of that fiber optic sensing element. The optical fiber sensing system reports an alert if this high resolution slow scan indicates the alarm condition.

BRIEF DESCRIPTION OF THE DRAWINGS

FIG. 1 is a schematic block diagram of an optical fiber overheat sensing system according to the present invention.

FIG. 2 is a flowchart describing a scanning method used by the optical fiber overheat sensing system of FIG. 1.

DETAILED DESCRIPTION

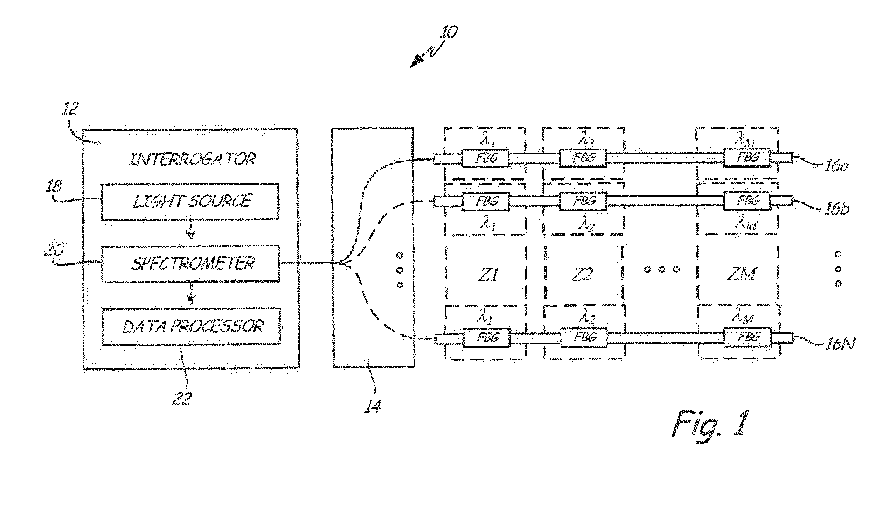

FIG. 1 is a schematic block diagram of optical fiber sensing system 10, comprising interrogator 12, optical switch 14, and sensing elements 16a, 16b, and 16N. Interrogator 12 further comprises broadband light source 18, high speed spectrometer 20, and data processor 22. Optical fiber sensing system 10 may be used to sense fires or overheat conditions in a wide range of applications, including on aircraft and other vehicles. Although optical fiber sensing system 10 is described herein as a temperature sensing system, optical fiber sensing system 10 may be used to monitor other parameters such as strain or pressure in other embodiments of the present invention.

Sensing elements 16a, 16b, ..., 16N are optical sensing elements that extend from optical switch 14 to sensing locations within zones Z1, Z2, ..., ZM. For purposes of explanation, sensing elements 16a, 16b, ..., 16N will be described hereinafter as FBG elements, although other types of sensing elements may equivalently be used. Similarly, although sensing elements 16a, 16b, ..., 16N are depicted as single fiber optic strands connected to optical switch 14 at only one end (i.e. to measure refracted light), other embodiments may comprise multiple fiber optic strands for comparative interferometry, or may be connected to optical switch 14 at both ends in a closed loop (i.e. to measure transmitted light). In the FBG system shown, each sensing element 16a, 16b, ..., 16N has a plurality of closely spaced FBGs, each with a single characteristic Bragg wavelength $\lambda_1$, $\lambda_2$, ..., $\lambda_M$ which can be used to distinguish between signals from each zone, as explained in further detail below.

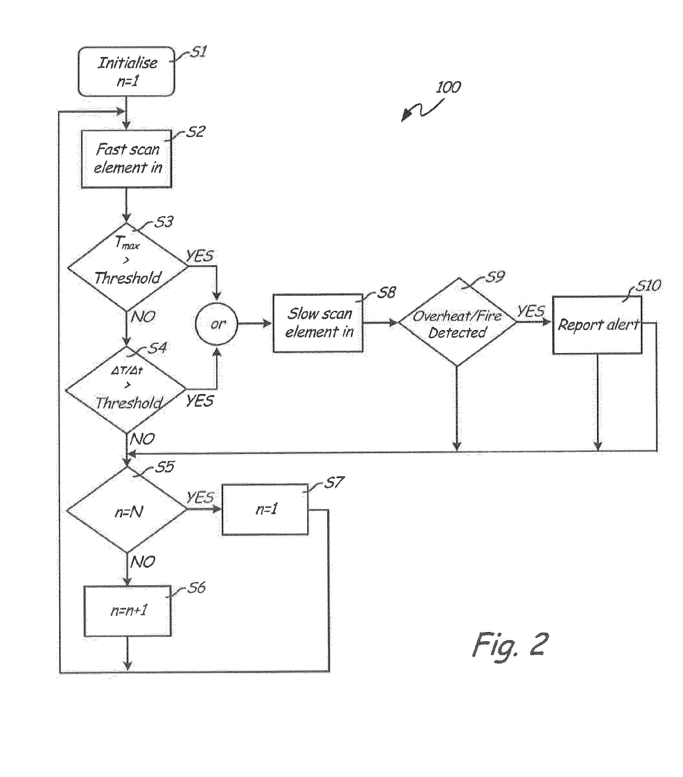

Interrogator 12 is an FBG interrogator comprising broadband light source 18, high speed spectrometer 20, and data processor 22. Broadband light source 18 may, for instance, be a Superluminescent Light Emitting Diode (SLED) source capable of producing light at several wavelengths. High speed spectrometer 20 is a spectrometer capable of rapidly assessing relative shift in Bragg wavelength ($\Delta\lambda_B/\lambda_B$). The particular speed requirements of high speed spectrometer 20 will depend on the number of optical sensing elements 16a, 16b, ..., 16N, and on the sampling speed requirements of optical fiber sensing system 10, which may in turn be determined by safety or fire-suppression requirements of the monitored regions or systems. Data processor 22 is a microprocessor or other logic-capable device configured to calculate temperature changes ($\Delta T$) from relative shifts in Bragg wavelength ($\Delta\lambda_B/\lambda_B$), and further configured to run scanning method 100 (described below with respect to FIG. 2.). Data processor 22 may be a programmable logic device such as a multi-function computer, or a fixed-function processor.

Optical switch 14 is a 1xN optical switch capable of sequentially connecting highspeed spectrometer 20 to each of sensing elements 16a, 16b, ..., 16N. More particularly, optical switch 14 is an optical switch capable of sequentially switching between sensing elements 16a, 16b, ..., 16N at varying rates dictated by data processor 22. Although optical switch 14 is depicted as a separate schematic block from interrogator 12, both interrogator 12 and optical switch 14 may in some embodiments be housed in a common enclosure or situated on a shared circuit board.

In the depicted embodiment, each sensing element 16a, 16b, ..., 16N is configured to sense temperature changes in M distinct zones. As stated above, each sensing element 16a, 16b, ..., 16N is outfitted with FBG having a distinct Bragg wavelength $\lambda_B$ in each zone Z1, Z2, ..., ZM, thereby allowing high speed spectrometer 20 and data processor 22 to distinguish between temperature changes in each zone. According to this embodiment, high speed spectrometer 20 identifies M distinct Bragg wavelengths from each sensing element 16a, 16b, ..., 16N, corresponding to zones Z1, Z2, ..., ZM, and analyzes the relative shift in each (e.g. $\Delta\lambda_1/\lambda_1$, $\Delta\lambda_2/\lambda_2$, ..., $\Delta\lambda_M/\lambda_M$). Processor 22 may alternatively or additionally differentiate between each zone Z1, Z2, ..., ZM based on time-of-flight from each zone to interrogator 12. Some embodiments of the present invention may sense only one temperature (i.e. only one zone) per sensing element 16a, 16b, ..., 16N.

Optical fiber sensing system 10 scans the plurality of sensing elements 16a, 16b, ..., 16N, each of which may service a plurality of zones Z1, Z2, ..., ZM. Spectrometer 20 and data processor 22 can scan sensing elements 16a, 16b, ..., 16N at variable rates, as described below with respect to FIG. 2. For each scanned sensing element 16a, 16b, ..., 16N, and for each scanned zone Z1, Z2, ZM, data processor 22 determines a deviation in temperature $\Delta T$ according to Equation 1. $\Delta T$ represents a change in temperature from a known baseline temperature $T_{baseline}$, such that a current temperature $T = T_{baseline} + \Delta T$.

FIG. 2 depicts scanning method 100, a method whereby data processor 22 controls optical switch 14 to scan sensing elements 16a, 16b, ..., 16N at variable rates. In many fire and overheat detection systems, impermissible delays in overheat or fire detection can result in dangerous conditions developing before fire suppression or extinguishing apparatus can be deployed. It is therefore essential that such systems be capable of a high interrogator scan rate, so as to minimize the time delay between subsequent checks of each sensing element 16a, 16b, ..., 16N. It is well known in the art, however, that spatial and temperature resolution are inversely related to interrogator scan rate in distributed optical fiber sensing systems. Although a high (fast) scan rate is necessary to ensure that all monitored components are interrogated frequently, the greater resolution provided by slower scanning rates may be needed to identify and localize a fire or overheat condition. Scanning method 100 allows optical fiber sensing system 10 to provide high spatial and temperature resolution when necessary, while maintaining a high normal scan rate, as described below.

Data processor 22 begins each scan of sensing elements 16a, 16b, ..., 16N by initializing an element number n=1 (Step S1) corresponding to sensing element 16a, and commanding high speed spectrometer 20 to perform a fast scan of corresponding sensing element 16a (step S2), e.g. by sending a light pulse from interrogator 12 through optical switch 14 into sensing element 16a and back at 5 Hz. Data processor 22 assesses temperature changes, and the position along sensing element 16a of any temperature changes, according to Equation 1, above. This fast scan may be too brief to provide high position or temperature accuracy, but provides a ballpark temperature value T.

Data processor 22 next compares sensed temperature T with a predetermined threshold value $T_{max}$ corresponding to a possible overheat condition (step S3). In some embodiments, data processor 22 may also determine a change in sensed temperature since a last measurement from sensing element 16a (i.e. $\Delta T/\Delta t = (T-T_{previous})/<timestep>$), and compare this change in sensed temperature to a second threshold value $\Delta T_{max}$. (Step S4). If either quantity exceeds the corresponding threshold value, data processor 22 initiates a slow scan of sensing element 16a, as described in greater detail below with respect to step S8. Otherwise, data processor 22 increments n, commands optical switch 14 to switch to the next sensing element, and repeats the process described above for sensing elements 16b through 16N, until n=N (steps S5 and S6). Upon performing fast scans of all sensing elements 16a, 16b, ..., 16N (corresponding to n=1 through n=N), data processor 22 reinitializes n=1 and repeats the entire method 100 from the beginning (step S7). By testing each sensing element 16a, 16b, ..., 16N using fasts scans, optical fiber sensing system 10 is able to provide at least a rough determination of temperature across all N sensing elements and M zones on a short timescale, e.g. 5 seconds or less.

Threshold values $T_{max}$ and $\Delta T_{max}$ are selected to trigger a slow scan whenever overheat conditions might have occurred, based on the limited accuracy measurements made during the fast scan of Step S2. Not every occurrence of T or $\Delta T/\Delta t$ exceeding the corresponding threshold value will indicate an overheat or fire event. If and when comparison of sensed temperature T and/or sensed change in temperature $\Delta T/\Delta t$ exceeds a corresponding threshold value for any sensing element 16a, 16b, ..., 16N (see steps S3 and S4), data processor 22 interrupts scanning of sensing elements 16a, 16b, ..., 16N to command high speed spectrometer 20 to begin a slow scan of the corresponding sensing element 16a, 16b, ..., 16N (step S8). This slow scan may take several seconds, and may involve considerably higher pulse frequency (e.g. 1000Hz) than the fast scan of step S2, consuming both greater time and greater energy. The slow scan of step S8 allows data processor 22 to determine temperature T (and/or change in temperature $\Delta T/\Delta t$) with much greater accuracy than the fast scan of step S2. In addition, the slow scan of step S8 allows for greater time-of-flight resolution of overheat or fire positions along the particular sensing element 16a, 16b, ..., 16N. Data processor 22 may evaluate several parameters, including temperature T and change in temperature $\Delta T/\Delta t$ as compared with expected values, to determine whether an overheat or fire condition has occurred (step S9), and accordingly report an overheat or fire alert, as necessary, to appropriate fire suppression or alarm system (step S10).

Method 100 enables optical fiber sensing system 10 to dynamically switch between fast and slow scanning rates, thereby retaining high scanning speeds during normal operation while allowing for precise temperature and position measurement of overheat or fire events. The fast scan of step S2 provides a low resolution temperature measurement that provides information applicable to general condition monitoring. Data processor 22 may be capable of identifying fire/overheat events over a certain magnitude based on this fast scan, but may be unable to accurately identify all overheat/fire conditions. The fast scan rate information will, however, provide an indication of the potential occurrence of all overheat/fire conditions. This may be seen as an increase in absolute temperature, or as an anomalous sharp increase in the rate of rise of temperature within the affected sensing element. When a potential fire or overheat condition is identified in any particular element the scan rate of the interrogator will be reduced and the optical switch configured to individually address this element (step S8). The information received for the slower scan rate is then used to determine whether a genuine overheat or fire alarm condition exists. After this step is performed, data processor 22 again increases the scan rate and resumes sequentially monitoring of all elements.

In some instances each sensing element 16a, 16b, ..., 16N may be subjected to slow scans (as described above with respect to step S8) on a periodic basis, in addition to any slow scans triggered by the threshold tests of steps S3 and S4. These periodic slow scans provide accurate assessments of the environment of each sensing element 16a, 16b, ..., 16N which may, for instance, for used for health monitoring and fire protection purposes. In one embodiment, each full cycle of method 100 will include a slow scan for one sensing element 16a, 16b, ..., 16N. A first full cycle of method 100 might include a scheduled slow scan of element 16a, for instance, while a second full cycle of method 100 might include a scheduled slow scan of element 16b, with this pattern repeating once all N sensing elements have been subjected to a slow scan.

While the invention has been described with reference to an exemplary embodiment(s), it will be understood by those skilled in the art that various changes may be made and equivalents may be substituted for elements thereof without departing from the scope of the invention. In particular, although the present invention has been described with respect to temperature sensing, a person skilled in the art will understand that method 100 may analogously be applied to systems which measure pressure, strain, or other quantities for which optical fiber sensors are available. Although sensing elements 16a, 16b, ..., 16N have been described as FBG sensing elements, other types of sensing elements may alternatively be used, with corresponding changes in the mathematical models used by data processor 22. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

**Claims**

1. An alarm condition detection method for an optical fiber sensing system (10), the alarm condition detection method comprising:

   conducting a fast scan of a plurality of fiber optic sensing elements (16a, 16b, 16N) using an interrogator (12) with a light source, a spectrometer, and a data processor (22);
   calculating a first environmental parameter value for each fiber optic sensing element (16a, 16b, 16N) from spectrographic data collected by the interrogator (12) during the fast scan;
   comparing the first environmental parameter value with a first threshold value for each fiber optic sensing element;
   conducting a high resolution slow scan of the current fiber optic sensing element (16a, 16b, 16N) in response to the first environmental parameter value exceeding the first threshold value; and
   reporting an alert if the high resolution slow scan of the current fiber optic sensing element (16a, 16b, 16N) indicates the alarm condition.

2. The alarm condition detection method of claim 1, wherein the environmental parameter is temperature.

3. The alarm condition detection method of claim 2, wherein the alarm condition is a fire or overheat event.

4. The alarm condition detection method of any preceding claim, further comprising:

   calculating a second environmental parameter value for each fiber optic sensing element (16a, 16b, 16N) from spectrographic data collected by the interrogator during the fast scan;
   comparing the second environmental parameter value with a second threshold value for each fiber optic sensing element; and
   conducting a high resolution slow scan of the current fiber optic sensing element (16a, 16b, 16N) in response to the second environmental parameter value exceeding the second threshold value.

5. The alarm condition detection method of claim 4, wherein the second environmental parameter value is a change in the environmental parameter value since a last measurement.

6. The alarm condition detection method of any preceding claim, further comprising determining a location of the alarm condition on the current fiber optic sensing element (16a, 16b, 16N).

7. The alarm condition detection method of claim 6, wherein determining a location of the alarm condition comprises identifying a distance from the interrogator to the location of the alarm condition by a time-of-flight measurement made during the high resolution slow scan, or wherein each fiber optic sensing element (16a, 16b, 16N) includes a plurality of Fiber Bragg Gratings (FBGs) with single characteristic Bragg wavelengths, and wherein determining a location of the alarm condition comprises identifying the characteristic Bragg wavelength of a FBG at the location of the alarm condition.

8. The alarm condition detection method of claim 1, wherein the first threshold value is selected to trigger a high resolution slow scan for ranges of the first environmental parameter value corresponding to a possible alarm condition, and/or further comprising periodically conducting a high resolution slow scan of each fiber optic sensing element.

9. An optical fiber sensing system (10) comprising:

   an interrogator (12) with a light source (18) and a spectrometer (20);
   a plurality of fiber optic sensing elements (16a, 16b, 16N);
   an optical switch (14) configured to sequentially connect the interrogator to each of the plurality of fiber optic sensing elements; and

a data processor (22) configured to calculate environmental parameter values
from spectroscopic analysis by the spectrometer of light refracted from the each of the plurality of fiber optic sensing elements;
wherein the data processor (22) is configured to control the optical switch (14) to
scan each fiber optic sensing element (16a, 16b, 16N) at a fast scan rate to calculate a rough environmental parameter value, and if the rough environmental parameter value for a particular fiber optic sensing element exceeds a first threshold, to scan that fiber optic sensing element at a slow scan rate to calculate a precise environmental parameter value.

10. The optical fiber sensing system of claim 9, wherein the data processor (22) is further configured to report an alert if the precise environmental parameter value exceeds a second threshold.

11. The optical fiber sensing system of claim 9 or 10, wherein the environmental parameter values are temperature values, the rough environmental parameter value is a rough temperature value, and the precise environmental parameter value is a precise temperature value, and/or wherein the data processor (22) is further configured to report a fire or overheat alert if the precise temperature value exceeds a second threshold.

12. The optical fiber sensing system of any of claims 9 to 11, wherein each of the plurality of fiber optic sensing elements comprise a plurality of Fiber Bragg Gratings (FBGs) with distinct single Bragg wavelengths.

13. The optical fiber sensing system of claim 12, wherein each distinct single Bragg wavelength is associated with a single zone sensed by at least one of the fiber optic sensing elements (16a, 16b, 16N), and/or wherein the data processor (22) is further configured to identify a location associated with each environmental parameter value based on the distinct single Bragg wavelength of a FBG at that location.

14. The optical fiber sensing system of claim 9, wherein the data processor is further configured to identify a location associated with each environmental parameter value based on time-of-flight measurements of light refracted from the fiber optic sensing elements, or wherein the data processor (22) is further configured to scan the fiber optic sensing element (16a, 16b, 16N) at the slow scan rate if a change in the rough environmental parameter value since a last measurement of the rough environmental parameter exceeds a third threshold.

15. The optical fiber sensing system of any of claims 9 to 14, wherein the data processor (22) is a part of the interrogator (12).

Fig. 1

Fig. 2